# EUROPEAN PATENT SPECIFICATION

(11) **EP 2 923 485 B1**
(45) Date of publication and mention of the grant of the patent: **13.05.2020**
(21) Application number: 12813115.8
(22) Date of filing: 26.11.2012
(51) Int. Cl.: H04N 5/262, H04N 7/18

(54) **AUTOMATED FILMING PROCESS FOR SPORT EVENTS**
AUTOMATISIERTES FILMBILDUNGSVERFAHREN FÜR SPORTVERANSTALTUNGEN
PROCÉDÉ AUTOMATIQUE POUR FILMER DES ÉVÉNEMENTS SPORTIFS

(43) Date of publication of application: 30.09.2015
(73) Proprietor: Sanviti, Romain, 20121 Milano (IT)
(72) Inventor: SANVITI, Romain, 20121 Milano (IT)
(86) International application number: PCT/IB2012/056730
(87) International publication number: WO 2014/080253

(56) References cited:
- EP-A2- 1 480 450
- WO-A1-00/27125
- WO-A1-01/69405
- WO-A1-2004/107760
- US-A1- 2007 126 873

## Description

The present invention relates to a process for the automated filming of sports events.

Various systems and processes for the automated filming of sports events are known in the prior art. The term automated means that filming is performed automatically without the need for a cameraman to start, move or operate the TV cameras or for any specific editing involving humans.

Lately, such systems have frequently been used to film amateur and non-professional sports events, when there is a need to reduce costs as much as possible.

For example, systems have been installed at some football fields used mainly to host matches between amateur players, said systems comprising a fixed TV camera which automatically films the entire sports event and, in response to a command sent by a user, saves a last previously defined fixed time interval on a specific digital medium.

In this way, when a goal is scored, or there is a particularly good action on the field, a command can be sent to save the video recording which can then be used and possibly shared online.

The prior art described above has several significant drawbacks.

Recordings done in this way are laborious to obtain and, secondly, cannot be edited.

To overcome this drawback, video recordings can be acquired by several TV cameras and then sent to users via the web or using other means of communication.

However, such transmission is extremely laborious and requires a very fast data transmission speed, given the huge amount of data contained in the plurality of video recordings.

EP1480450 A2 discloses a system for selecting camera shots in a live event. The system includes fixed and automated cameras and when motion is detected from the video of a fixed camera, the system selects another camera using a set of rules. WO00/27125 discloses a system to film a presentation in an auditorium with one camera dedicated to filming the screen on which slides are shown and one camera filming the audience and/or the presenter. The degree of change in the frames of the camera filming the screen is calculated and the shot from that camera is automatically selected when that degree of change is above a given threshold WO2004/107760 discloses a video surveillance system that automatically selects video signals from a large number of cameras to be displayed on a smaller number of screens based on detected motion in the signals. A lower threshold defining motion is used. US2007/0126873 A1 discloses a video surveillance system that automatically selects video signals to be displayed based on detected motion, face recognition or fire detection. All selected signals at a given time are combined for display.

In this situation the technical purpose of the present invention is to develop a process for the automated filming of sports events able to substantially overcome the inconveniences mentioned above.

Within the sphere of said technical purpose, one important aim of the invention is to obtain a process for the automated filming of sports events whereby video recordings can be watched immediately and which is capable of filming substantially only the action on the field.

Another important aim of the invention is to conceive a process for the automated filming of sports events which produces video recordings that can be transferred rapidly via the web.

The technical purpose and specified aims are achieved with a process for the automated filming of sports events as claimed in the appended Claim 1. Preferred embodiments are described in the dependent claims.

The characteristics and advantages of the invention are clearly evident from the following detailed description of a preferred embodiment thereof, with reference to the accompanying drawings, in which:

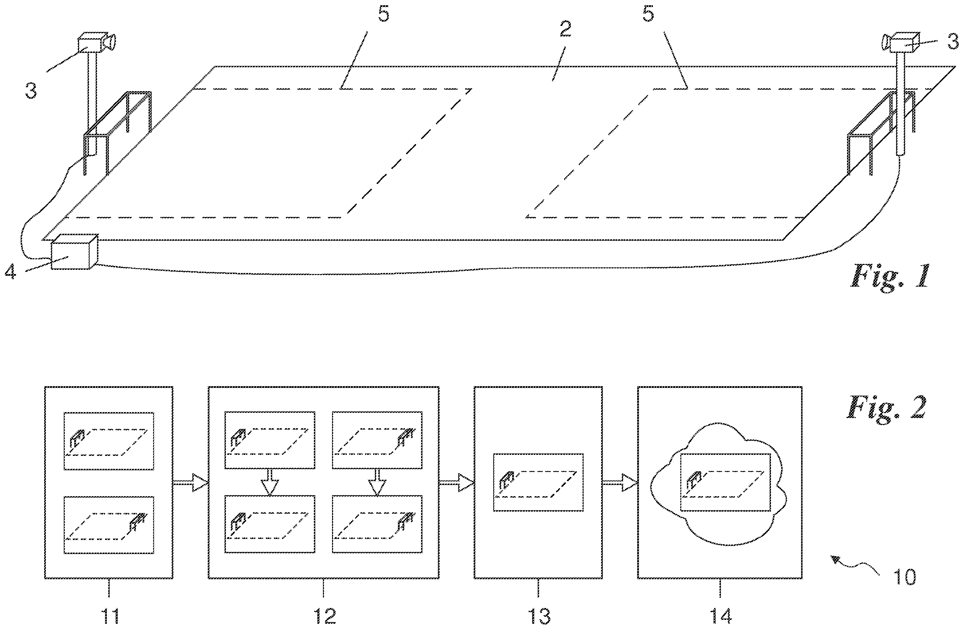

**Fig. 1** schematically illustrates a system for the automated filming of sports events according to the invention; and
**Fig. 2** schematically illustrates a process for the automated filming of sports events according to the invention.

With reference to said drawings, reference numeral **10** globally denotes the process for the automated filming of sports events.

The process 10 is suitable for filming games played on a spatially delimited sports field **2,** for example ball games and similar games. A preferred application of said process is the game of football but said process 10 may also be used for many other games instead, such as: basketball, tennis, rugby and many other games.

The filming process 10 is implemented by means of an automated filming system **1,** the structure of which is described below.

It comprises, in brief: a plurality of TV cameras **3,** each one suitable to frame a filming area **5** of the sports field 2, an electronic data processer **4** or computer, connected to the TV cameras 3, and connected to end users preferably via the web or internet.

In detail, there are preferably two TV cameras 3, each of which appropriately suitable to produce high-definition video recordings, in particular in full HD. Each TV camera 3 is preferably arranged at one end of the sports field 2 and in a raised position, so as to be able to frame a wide filming area 5 without any perspective distortion. In particular, if there are two TV cameras 3 and the sports field is rectangular, said TV cameras 3 are arranged on the outside of the sports field 2 at the point halfway along the short sides of said field, and at a height of between 1.5 metres and 3 metres with respect to the ground on which the field is marked out.

The TV cameras 3 are preferably connected to the electronic data processor 4 by means of known wired or wireless connections. Said connections are also preferably dedicated, and do not overload other communication channels such as web channels. The data processor 4 is therefore appropriately in proximity to the TV cameras 3, in particular in the same group of buildings and sports complex or the like.

According to an alternative embodiment, said TV cameras are connected to the electronic data processor 4 via the web.

The electronic data processor 4 preferably consists of a server computer of a type known in the prior art, and is also appropriately connected to the end users via the web or, alternatively, via television communication protocols or other.

The process 10, implemented by means of the device 1, is described below.

It comprises, in brief, a filming step **11,** in which each TV camera 3 acquires a video recording and sends it to the electronic data processor 4, an assessment step **12,** performed by the electronic data processor 4, in which the changes within each single video recording are assessed, a selection step **13,** in which one single video recording is selected, and a transmission step **14,** in which the video recording is transmitted to the end users.

In detail, in the filming step 11 each TV camera 3 acquires a video recording of at least the fixed filming area 5 and part of the sports field 2. The TV camera 3 is thus also fixed.

The filming area 5 can be selected by the user according to the type of sports field and game. In particular it consists of a main portion of one half of the sports field 2, more in particular of the portion of the half of the field closest to the area in which the points are scored, for example in proximity to the goal and the penalty area in the case of football, in proximity to the basket in the case of basketball, and so on. The filming area 5 is preferably rectangular. Moreover the filming area 5 is preferably at a distance from the relative TV camera 3 such that the ratio between the distance of the point of the filming area 5 furthest away from the TV camera 3 and that of the filming point closest to the TV camera 3, is less than 4 and more preferably less than 2.5. In that way the perspective does not excessively distort the proportions of the players on the sports field and can be ignored during the assessment step 12.

During the filming step 11 high definition video recordings are obtained, preferably in the full HD format corresponding to 1920 x 1080 pixels. The video recordings clearly comprise a plurality of image frames, in particular 18 to 32 image frames per second, more in particular 24.

The video recordings, from each TV camera, are sent to the electronic data processor 4 via the specific dedicated connections, in particular via cabled connections or, alternatively, wireless connections.

The electronic data processor 4 performs the subsequent assessment step 12. In said assessment step 12 each video recording is assessed individually.

In particular, different image frames relating to a same video recording are compared and the degree of change between the different image frames is assessed.

Said degree of change is determined by assessing the difference in colour of the individual corresponding pixels, belonging to said different image frames. Alternatively, other change-related parameters, such as changes in the position of people, or other changes, can be measured. Said change is, for example, assessed by means of software programs suitable to perform conventional motion detection, for example using the software library known as Aforge in the Microsoft .NET environment, while the image frames are acquired with Milestone libraries, preferably in the same environment.

In particular, the change in subsequent image frames is assessed and more in particular in adjacent image frames. Moreover, advantageously, not every pair of adjacent image frames is assessed, but the assessment step 12 is only performed at each comparison period.

In particular, the comparison period is comprised between 6 and 18 image frames, more in particular between 10 and 14 image frames and yet more in particular every 12 image frames. Consequently the 12^{th} image frame is compared with the 11^{th} and the 24^{th} with the 23^{rd}.

The comparison period is thus comprised between 0.1 seconds and 1 second and approximately close to 0.5 seconds.

Moreover the different assessment steps 12 performed on different video recordings are performed on image frames acquired substantially simultaneously.

From the assessment a scale emerges on which the changes are rated on a scale from 0, which corresponds to a change of 0%, i.e. substantially no change between image frames, to 1, which corresponds to a change of 100%, i.e. total change of the pixels in the two image frames being compared.

The subsequent selection step 13 is also performed by the electronic data processor 4, which consequently produces an edited video recording, obtained by automatically selecting at each time interval one of said video recordings, according to the degree of change, as described below.

Said time intervals appropriately correspond to the comparison periods described previously.

The next selection step 13 of the specific video recording is preferably performed by selecting the video recording with the greatest degree of change. In particular in the selection step a new video recording is selected, instead of the one that has currently been selected, only if said degree of change of said new video recording, with respect to said currently selected video recording, exceeds a given threshold. Otherwise the data processor 4 continues to select the current video recording. Said solution avoids continuous changes of shot at times when play is slack. Said change threshold corresponds to a degree of change comprised between 0.00001 and 0.01, which corresponds to a percentage of pixels changed in colour comprised between 0.001% and 1%. Said threshold can also be selected by the owner of the system.

Lastly, in the transmission step 14 the edited video recording is transmitted preferably via web to the end users.

In particular, the edited video recording is stored on a specific web space, such as a website or part of a known website. The end users can thus access said web space to watch the video recording and possibly share it with other users.

In particular said web space contains some functions, of a type known in the prior art, whereby it is possible to select a temporal portion of the video recording and share it on social networks with other users. For example goals and points scored or spectacular actions can be shared.

The use of the system 1, described in detail in functional terms, is as follows:
The system is installed by positioning the TV cameras 3 on specific supports, arranging the electronic data processor 4 in proximity to the TV cameras 3, and connecting the TV cameras 3, at one or more sports fields, to the electronic data processor 4.

Next the various software parameters are defined, in particular the filming areas 5, the change threshold and, where applicable, the comparison period. Said parameters are configured according to the game and the dimensions and type of sports field.

The matches are thus filmed automatically and the edited video recordings that are obtained are automatically controlled.

The end users can thus also watch the edited video recordings, on demand but also live, and share various actions on social networks, or simply watch the match again.

The invention achieves some important advantages.

The system 1 and process described permit the creation of video recordings that are edited automatically, thus considerably reducing the costs involved.

Moreover, said steps of assessment 12 and of selection 13, preferably implemented by a specific software program, allow the end user to watch, and thus to download from the web, a single edited video recording and not a plurality of video recordings that would overload the user's internet connection. Said advantage is also obtained by the system manager if the TV cameras 3 are connected to the electronic data processor 4 by means of dedicated connections. In that case, the manager also only needs to transmit a single edited video recording rather than a plurality of video recordings for each sports field, which would require a faster connection.

Moreover, thanks to the processes described, there is no substantial loss of information with the edited video recording in relation to the plurality of video recordings. Furthermore. the selection of the comparison period and of the processes described avoids overloading the electronic data processor 4 with too many pointless calculations.

Modifications and variations may be made to the invention described herein without departing from the scope of the present invention.

## Claims

1. A process for the automated filming of sports events on sports fields (2) using a filming system (1) comprising: a plurality of TV cameras (3) each framing at least one filming area (5) of said sports field (2), an electronic data processor (4) connected to said TV cameras (3), said process comprising a filming step (11) in which each of said TV cameras (3) acquires a video recording, consisting of a plurality of image frames, and sends it to said electronic data processor (4), and wherein it comprises: an assessment step (12), performed by said electronic data processor (4), in which, for each of said video recordings, different image frames relating to a same video recording are compared and the degree of change between said different image frames is assessed, a selection step (13), performed by said electronic data processor (4), in which an edited video recording is obtained by means of the selection, at each given time interval, of one of said video recordings, according to said degree of change, wherein in said selection step a new video recording with the greatest said degree of change is selected among said video recordings if said greatest degree of change of said new video recording, with respect to the currently selected video recording, exceeds a given threshold.

2. The process as claimed in claim 1, wherein said degree of change is determined by means of the assessment of the difference in the colour of the corresponding individual pixels, belonging to said different image frames.

3. The process as claimed in one or more of the preceding claims, wherein different assessment steps (12) performed on different video recordings are performed on image frames acquired substantially simultaneously.

4. The process according to one or more of the preceding claims, wherein in the assessment step (12), for each of said video recordings, adjacent image frames are compared.

5. The process as claimed in one or more of the preceding claims, wherein said assessment step (12) is performed at each comparison period and wherein said comparison period is comprised between 6 and 18 image frames.

6. The process as claimed in the preceding claim, wherein said comparison period is comprised between 10 and 14 image frames.

7. The process as claimed in one or more of the preceding claims, wherein said electronic data processor (4) is arranged in proximity to said TV cameras (3) and connected thereto by means of dedicated connections, and wherein the process (10) comprises a transmission step (14) in which said edited video recording is transmitted via a web space.

## Patentansprüche

1. Verfahren zum automatisierten Filmen von Sportereignissen auf Sportfeldern (2) unter Verwendung eines Filmsystems (1), umfassend: mehrere Fernsehkameras (3), die jeweils mindestens einen Filmbereich (5) des Sportplatzes (2) umrahmen. einen elektronischen Datenprozessor (4), der mit den Fernsehkameras (3) verbunden ist, wobei der Prozess einen Filmschritt (11) umfasst, in dem jede der Fernsehkameras (3) eine Videoaufzeichnung erfasst, die aus mehreren Bildrahmen besteht, und sendet es an den elektronischen Datenprozessor (4) und umfasst: einen Bewertungsschritt (12), der von dem elektronischen Datenprozessor (4) ausgeführt wird, in dem für jede der Videoaufzeichnungen unterschiedliche Rahmen sind, die sich auf dieselbe Videoaufzeichnung beziehen verglichen und der Grad der Änderung zwischen den verschiedenen Bildrahmen bewertet wird, ein Auswahlschritt (13), der von dem elektronischen Datenprozessor (4) durchgeführt wird, in dem eine bearbeitete Videoaufzeichnung mittels Auswahl in jedem gegebenen Zeitintervall erhalten wird, von einer der Videoaufnahmen entsprechend dem Grad von Änderung wobei in dem Auswahlschritt eine neue Videoaufzeichnung mit dem größten Änderungsgrad unter den Videoaufzeichnungen ausgewählt wird, wenn der größte Änderungsgrad der neuen Videoaufzeichnung in Bezug auf die aktuell ausgewählte Videoaufzeichnung einen gegebenen Schwellenwert überschreitet.

2. Verfahren nach Anspruch 2, wobei der Änderungsgrad mittels der Bewertung des Farbunterschieds der entsprechenden einzelnen Pixel, die zu den verschiedenen Bildrahmen gehören, bestimmt wird.

3. Verfahren nach einem oder mehreren der vorhergehenden Ansprüche, wobei verschiedene Bewertungsschritte (12), die an verschiedenen Videoaufzeichnungen durchgeführt werden, an Bildrahmen durchgeführt werden, die im Wesentlichen gleichzeitig aufgenommen wurden.

4. Verfahren nach einem oder mehreren der vorhergehenden Ansprüche, wobei in dem Bewertungsschritt (12) für jede der Videoaufzeichnungen benachbarte Bildrahmen verglichen werden.

5. Verfahren nach einem oder mehreren der vorhergehenden Ansprüche, wobei der Bewertungsschritt (12) bei jeder Vergleichsperiode durchgeführt wird und wobei die Vergleichsperiode zwischen 6 und 18 Bildrahmen umfasst.

6. Verfahren nach einem oder mehreren der vorhergehenden Ansprüche, wobei die Vergleichsperiode zwischen 10 und 14 Bildrahmen umfasst.

7. Verfahren nach einem oder mehreren der vorhergehenden Ansprüche, wobei der elektronische Datenprozessor (4) in der Nähe der Fernsehkameras (3) angeordnet und über dedizierte Verbindungen damit verbunden ist und wobei das Verfahren (10) a umfasst Übertragungsschritt (14), in dem die bearbeitete Videoaufzeichnung über einen Webspace übertragen wird.

## Revendications

1. Procédé de tournage automatisé d'événements sportifs sur des terrains de sport (2) à l'aide d'un système de tournage (1) comprenant: une pluralité de caméras de télévision (3) encadrant chacune au moins une zone de tournage (5) dudit terrain de sport (2) un processeur de données électronique (4) connecté auxdites caméras de télévision (3), ledit processus comprenant une étape de tournage (11) au cours de laquelle chacune desdites caméras de télévision (3) acquiert un enregistrement vidéo, composé d'une pluralité de trames d'image, et l'envoie audit processeur de données électroniques (4) et il comprend: une étape d'évaluation (12), effectuée par ledit processeur de données électroniques (4), dans laquelle, pour chacun desdits enregistrements vidéo, différentes trames relatives à un même enregistrement vidéo sont comparées et le degré de changement entre lesdites différentes images est évalué, une étape de sélection (13), effectuée par ledit processeur de données électroniques (4), dans laquelle un enregistrement vidéo édité est obtenu au moyen d'une sélection, à chaque intervalle de temps donné, de l'un desdits enregistrements vidéo, en fonction dudit degré de changer, dans lequel, dans ladite étape de sélection, un nouvel enregistrement vidéo avec le plus grand dit degré de changement est sélectionné parmi lesdits enregistrements vidéo si ledit plus grand degré de changement dudit nouvel enregistrement vidéo, par rapport à l'enregistrement vidéo actuellement sélectionné, dépasse un seuil donné

2. Procédé selon la revendication 2, dans lequel ledit degré de changement est déterminé au moyen de l'évaluation de la différence de couleur des pixels individuels correspondants, appartenant auxdites différentes images.

3. Procédé selon l'une ou plusieurs des revendications précédentes, dans lequel différentes étapes d'évaluation (12) effectuées sur différents enregistrements vidéo sont effectuées sur des trames d'image acquises sensiblement simultanément.

4. Procédé selon une ou plusieurs des revendications précédentes, dans lequel à l'étape d'évaluation (12), pour chacun desdits enregistrements vidéo, des trames d'images adjacentes sont comparées.

5. Procédé selon l'une ou plusieurs des revendications précédentes, dans lequel ladite étape d'évaluation (12) est effectuée à chaque période de comparaison et dans lequel ladite période de comparaison est comprise entre 6 et 18 trames d'image.

6. Procédé selon l'une ou plusieurs des revendications précédentes, dans lequel ladite période de comparaison est comprise entre 10 et 14 trames d'image.

7. Procédé selon l'une ou plusieurs des revendications précédentes, dans lequel ledit processeur de données électronique (4) est disposé à proximité desdites caméras de télévision (3) et connecté à celles-ci au moyen de connexions dédiées, et dans lequel le processus (10) comprend un étape de transmission (14) dans laquelle ledit enregistrement vidéo édité est transmis via un espace Web
